# EUROPÄISCHE PATENTSCHRIFT

(11) **EP 2 791 996 B1**
(45) Veröffentlichungstag und Bekanntmachung des Hinweises auf die Patenterteilung: **19.09.2018**
(21) Anmeldenummer: 12809117.0
(22) Anmeldetag: 12.12.2012
(51) Int. Cl.: H01M 2/20, H01M 2/10

(54) **BATTERIE FÜR EIN KRAFTFAHRZEUG**
BATTERY FOR A MOTOR VEHICLE
BATTERIE DE VÉHICULE AUTOMOBILE

(30) Priorität: 16.12.2011 DE 102011121488
(43) Veröffentlichungstag der Anmeldung: 22.10.2014
(73) Patentinhaber: Audi AG, 85045 Ingolstadt (DE)
(72) Erfinder: PAULESER, Thomas, 86529 Schrobenhausen (DE); AVDIC, Reuf, 85055 Ingolstadt (DE); ACIKGOEZ, Erdal, 85084 Reichertshofen (DE); SCHMIDT, Jörg, 85057 Ingolstadt (DE)
(74) Vertreter: Herbst, Matthias Heinz
(86) Internationale Anmeldenummer: PCT/EP2012/005126
(87) Internationale Veröffentlichungsnummer: WO 2013/087196

(56) Entgegenhaltungen:
- DE-A1- 10 122 682
- DE-A1-102007 047 652
- US-A1- 2005 285 567

## Beschreibung

Die vorliegende Erfindung betrifft eine Batterie für ein Kraftfahrzeug. Überdies betrifft die vorliegende Erfindung ein Verfahren zum Fertigen einer Batterie für ein Kraftfahrzeug.

Um Elektro- und Hybridfahrzeuge mit elektrischer Energie zu versorgen, werden üblicherweise Hochvoltbatterien eingesetzt, bei denen eine Vielzahl von Einzelzellen parallel und in Reihe geschaltet werden. Bei den Einzelzellen wird grundsätzlich zwischen den drei Bauformen zylindrisch, Folienzelle (Pouch) und prismatisch unterschieden. Die Einzelzellen werden zu entsprechenden Zellstapeln kombiniert und elektrisch miteinander gekoppelt. Eine Möglichkeit besteht darin, dass alle Einzelzellen in dem Zellstapel in Reihe geschaltet werden (1P-System). Alternativ dazu können beispielsweise zwei Einzelzellen parallel geschaltet werden (2P-System) und diese wiederum mit einem oder weiteren 2P-Systemen in Reihe geschaltet werden. Die Anzahl der parallel geschalteten Einzelzellen ist hierbei beliebig. Die aus dem Stand der Technik bekannten Zellstapel werden mit zumindest einem weiteren Zellstapel elektrisch in Reihe geschaltet. Dies kann beispielsweise mit einer seitlich an der Batterie angebrachten beziehungsweise außenliegenden Stromschiene ermöglicht werden.

Aus der US 2011/0159353 A1 ist eine Batterie bekannt, bei der die Einzelzellen in einem Zellstapel derart nebeneinander angeordnet sind, dass entlang einer Längsachse des Zellstapels ungleichnamige Pole der Einzelzellen nebeneinander angeordnet sind. Die ungleichnamigen Pole von benachbarten Einzelzellen sind jeweils mit einer Stromschiene verbunden, um eine Reihenschaltung der Einzelzellen zu ermöglichen.

Die WO 2009/149690 A1 beschreibt eine Batterie, die eine Vielzahl von in Reihe geschalteter Zellstapel aufweist. Ein solcher Zellstapel kann eine Einzelzelle umfassen oder aus parallel geschalteten Einzelzellen aufgebaut sein.

Die WO 2011/072974 A1 beschreibt ein Verfahren zum Verbinden von Zellableitern von Einzelzellen einer Batterie, mit der eine elektrische Verbindung von Einzelzellen erreicht werden kann und sich insgesamt eine geringe Bauhöhe der Batterie ergibt.

Die DE 600 04 169 T2 beschreibt eine Anordnung von Einzelzellen, die eine flache Bauform aufweisen. Hierbei sind die Einzelzellen zueinander gestapelt angeordnet, wobei die elektrische Verbindung zwischen den Einzelzellen mithilfe entsprechender außenliegender Bügel erreicht wird.

Die US 2003/0146734 A1 beschreibt eine Batterie mit einer Mehrzahl von Batteriezellen, die als Folienzellen ausgebildet sind. Dabei sind die Batteriezellen in Gruppen von zwei Zellstapel angeordnet, wobei die beiden Zellstapel so zueinander angeordnet sind, dass sich die Anschlussbereiche der Batteriezellen in dem ersten Zellstapel und die Anschlussbereiche der Batteriezellen im zweiten Batteriestapel gegenüberstehen. Die elektrischen Kontakte in den Anschlussbereichen sind auf eine Leiterbahn geführt, mit der die einzelnen Batteriezellen parallel, seriell oder seriell und parallel miteinander verbunden sind.

Des Weiteren beschreibt die JP 2000 200 593 A eine Batterie mit einer Mehrzahl von Batteriezellen, die parallel miteinander verbunden sind. Dabei sind die Batteriezellen so zueinander angeordnet, dass sich ihre Anschlussbereiche gegenüberstehen.

Ferner beschreibt die US 2005/285567 A ein wiederaufladbares Batteriemodul. Das Batteriemodul weist eine Vielzahl von Einheitsbatterien auf, die in konstanten Intervallen angeordnet sind, und ein Gehäuse, das die Einheitsbatterien enthält und in dem Luft zum Steuern einer Temperatur jeder der Einheitsbatterien fließt. Die Einheitsbatterien sind in zwei Batteriesäulen unterteilt, die auf jeder Seite einer zentralen Struktur vorgesehen sind, so dass sich die Anschlüsse der Einheitsbatterien in verschiedenen Spalten gegenüberstehen.

Schließlich beschreibt die US 2006/0166086 A1 eine Batterieanordnung, insbesondere für einen tragbaren Computer, bei der die Einzelzellen gestapelt zueinander angeordnet sind. Die Batterieanordnung umfasst an einer Stirnseite ein Verbindungselement, mit dem die Einzelzellen seriell und parallel miteinander verbunden sind.

Die Aufgabe der vorliegenden Erfindung ist es, eine kostengünstige und bauraumsparende Anordnung von Einzelzellen in einer Batterie eines Kraftfahrzeugs bereitzustellen.

Diese Aufgabe wird erfindungsgemäß durch eine Batterie gemäß Patentanspruch 1 und durch ein Verfahren gemäß Patentanspruch 5 gelöst. Vorteilhafte Weiterbildungen der vorliegenden Erfindung sind in den Unteransprüchen angegeben.

Die erfindungsgemäße Batterie für ein Kraftfahrzeug umfasst einen ersten Zellstapel und einen zweiten Zellstapel, wobei der erste und der zweite Zellstapel elektrisch gekoppelt sind, der erste und der zweite Zellstapel jeweils eine Mehrzahl von Zelleinheiten umfassen, die entlang einer Längsachse der Batterie nebeneinander angeordnet und elektrisch gekoppelt sind, und jede der Zelleinheiten in einem Kopfbereich ein erstes elektrisches Kontaktelement mit einer ersten Polarität und ein zweites elektrisches Kontaktelement mit einer zweiten Polarität aufweist, wobei in der Batterie die Kopfbereiche der Zelleinheiten in dem ersten Zellstapel und die Kopfbereiche der Zelleinheiten in dem zweiten Zellstapel einander zugewandt sind und jeweils einander zugewandte Zelleinheiten des ersten und des zweiten Zellstapels elektrisch gekoppelt sind. Dabei bilden jeweils einander zugewandte Zelleinheiten des ersten und zweiten Zellstapels, die elektrisch gekoppelt sind, eine Zellgruppe und nebeneinander angeordnete Zellgruppen sind elektrisch gekoppelt. Zudem sind die Zellgruppen entlang einer Längsachse der Batterie abwechselnd in dem ersten und dem zweiten Zellstapel elektrisch gekoppelt.

Die Batterie umfasst zwei Zellstapel, die jeweils aus mehreren Zelleinheiten gebildet sind. Eine solche Zelleinheit kann nur eine Einzelzelle umfassen oder kann aus mehreren Einzelzellen gebildet sein. Die jeweiligen Zelleinheiten umfassen ein erstes elektrisches Kontaktelement beziehungsweise einen ersten Pol mit einer ersten Polarität und ein zweites elektrisches Kontaktelement beziehungsweise einen zweiten Pol mit einer zweiten Polarität, die jeweils in einem Kopfbereich der Zelleinheit angeordnet sind. Mit anderen Worten umfasst jede Zelleinheit zwei Pole, die auf der gleichen Seite der Zelleinheit angeordnet sind. Die beiden Zellstapel werden in der Batterie so zueinander angeordnet, dass sich die Kopfbereiche der Zelleinheiten in dem ersten und dem zweiten Stapel gegenüberstehen. Somit stehen sich auch die Kontaktelemente beziehungsweise Pole der Zelleinheiten gegenüber.

Bevorzugt sind der erste und der zweite Zellstapel baugleich aufgebaut. Das bedeutet, die jeweiligen Zellstapel weisen jeweils die gleiche Anzahl und Anordnung an Zelleinheiten auf. Somit kann eine einfache Anordnung der beiden Zellstapel dadurch erreicht werden, dass der zweite Zellstapel in Bezug zu dem ersten Zellstapel um einen Winkel von 180° um seine Hochachse gedreht wird und auf den Kopf gestellt wird und die beiden Zellstapel so zueinander platziert werden, dass sich ihre Pole beziehungsweise elektrischen Kontaktelemente gegenüberstehen. Somit kann eine Zuordnung jeweils einer Zelleinheit in dem ersten Zellstapel zu jeweils einer Zelleinheit in dem zweiten Zellstapel erreicht werden. Zwischen den einander zugeordneten Zelleinheiten des ersten und des zweiten Zellstapels wird jeweils eine elektrische Verbindung vorgesehen. Dadurch, dass sich die elektrischen Kontaktelemente der Zelleinheiten in dem ersten Zellstapel und die Zelleinheiten in dem zweiten Zellstapel gegenüberstehen, kann auf einfache Weise eine elektrische Verbindung zwischen einander zugeordneten Zelleinheiten des ersten und des zweiten Zellstapels ermöglicht werden.

Die beiden Zellstapel sind einander so zugeordnet, dass einander zugewandte Zelleinheiten des ersten und zweiten Zellstapels eine Zellgruppe bilden. Die gesamte Batterie weist somit eine Mehrzahl von nebeneinander angeordneten Zellgruppen auf, die elektrisch miteinander verbunden sind. Somit kann auf besonders einfache Weise eine elektrische Verschaltung der Einzelzellen in der Batterie erreicht werden. Dies hat zur Folge, dass auf eine entsprechende Stromschiene verzichtet werden kann, mit der die beiden Zellstapel elektrisch miteinander verbunden werden. Dadurch kann Bauraum und Gewicht eingespart werden.

Zudem sind die Zelleinheiten in dem ersten und zweiten Zellstapel so zueinander angeordnet, dass entlang der Längsachse der Batterie die ersten und zweiten elektrischen Kontaktelemente jeweils alternierend zueinander angeordnet sind. Die einzelnen Zelleinheiten in einem Zellstapel können so zueinander angeordnet sein, dass benachbarte Zelleinheiten jeweils um einen Winkel von 180° um ihre Hochachse zueinander gedreht angeordnet sind. Somit sind die elektrischen Kontaktelemente beziehungsweise Pole mit einer ersten und einer zweiten Polarität entlang einer Längsachse der Batterie beziehungsweise des Zellstapels alternierend zueinander angeordnet. Eine solche Anordnung wird üblicherweise zur Reihenschaltung der Zelleinheiten in einem Zellstapel verwendet. Somit kann diese Anordnung auf einfache Weise übernommen werden.

Ferner sind an einer ersten Stirnseite der Batterie die elektrische Kontaktelemente von zwei benachbarten Zelleinheiten in dem ersten und zweiten Zellstapel jeweils alternierend elektrisch verbunden und nicht verbunden, wobei entlang der Hochachse der Batterie zwei verbundene Kontaktelemente in dem ersten Zellstapel jeweils zwei nicht verbundenen Kontaktelementen in dem zweiten Zellstapel gegenüberstehen. An der ersten Stirnseite der Batterie sind jeweils einander zugeordnete Zelleinheiten des ersten und zweiten Zellstapels, die eine Zellgruppe bilden, elektrisch miteinander verbunden. Somit erfolgt die elektrische Kontaktierung der jeweiligen Zellgruppe entlang einer Längsachse der Batterie abwechselnd in dem ersten und dem zweiten Zellstapel. Zur elektrischen Verbindung von den Polen benachbarter Zelleinheiten in einem Zellstapel kann ein elektrisches Kontaktelement, beispielsweise in Form eines entsprechenden Metallelements beziehungsweise einer Stromschiene, verwendet werden. Auf diese Weise können benachbarte Zellgruppen besonders einfach elektrisch verbunden werden.

Außerdem ist an der ersten Stirnseite der Batterie zwischen den Kontaktelementen der Zelleinheiten in dem ersten Zellstapel und den Kontaktelementen der Zelleinheiten in dem zweiten Zellstapel zumindest ein Isolierelement angeordnet. An der ersten Stirnseite der Batterie sind nur die einzelnen Zellgruppen miteinander elektrisch verbunden. Eine entsprechende elektrische Verbindung einander zugeordneter Zelleinheiten aus dem ersten und dem zweiten Zellstapel ist hier nicht vorgesehen. Im einfachsten Fall können die Kontaktelemente der Zelleinheiten in dem ersten Zellstapel zu den elektrischen Kontaktelementen der Zelleinheiten in dem zweiten Zellstapel beabstandet zueinander angeordnet sein. In diesem Fall dient Luft als das Isolierelement. Eine andere Möglichkeit besteht darin, zwischen den Kontaktelementen ein elektrisch isolierendes Material, beispielsweise einen Kunststoff der dergleichen, einzubringen. Somit kann eine elektrische Isolierung auf besonders einfache Weise ermöglicht werden.

Des Weiteren ist an einer der ersten Stirnseite gegenüberliegenden zweiten Stirnseite der Batterie ein erstes Kontaktelement der Zelleinheit in dem ersten Zellstapel jeweils mit einem zweiten Kontaktelement einer Zelleinheit in dem zweiten Zellstapel elektrisch verbunden. Um eine entsprechende elektrische Verbindung voneinander zugeordneten Zelleinheiten in dem ersten Zellstapel zu in jeweiligen Zelleinheiten in dem zweiten Zellstapel zu ermöglichen, ist an der zweiten Stirnseite der Batterie zwischen einem Pol mit einer ersten Polarität einer Zelleinheit in dem ersten Zellstapel und einem Pol mit einer zweiten Polarität einer Zelleinheit in dem zweiten Zellstapel ein elektrisches Verbindungselement angeordnet. Die zuvor beschriebenen Pole können auch direkt elektrisch in Kontakt stehen beziehungsweise stoffschlüssig verbunden sein. Auf diese Weise kann eine besonders einfache elektrische Verbindung einander zugeordneter Zelleinheiten des ersten und zweiten Zellstapels ermöglicht werden.

Bevorzugt ist ein erstes elektrisches Kontaktelement einer Zelleinheit in dem ersten Zellstapel jeweils zu einem zweiten elektrischen Kontaktelement einer Zelleinheit in dem zweiten Zellstapel entlang einer Hochachse der Batterie zumindest bereichsweise fluchtend angeordnet. Durch eine fluchtende Anordnung der elektrischen Kontaktelemente beziehungsweise Pole der jeweiligen Zelleinheiten in dem ersten und zweiten Zellstapel zueinander ergeben sich geometrisch gesehen kurze Wege zwischen den einzelnen Polen, die verbunden werden sollen. Die beiden Zellstapel können zusätzlich derart zueinander angeordnet werden, dass sie entlang der Hochachse einen geringen Abstand zueinander aufweisen. Dadurch können elektrische Verbindungselemente zwischen den jeweiligen Polen verwendet werden, die eine geringe geometrische Abmessung aufweisen. Dadurch können Kosten und Gewicht eingespart werden.

In einer Ausgestaltung umfasst jede der Zelleinheiten zumindest zwei Einzelzellen, die in Richtung der Längsachse der Batterie nebeneinander angeordnet sind und die elektrisch parallel geschaltet sind. Jede Zelleinheit kann auch aus zwei oder mehreren Einzelzellen aufgebaut sein, die jeweils parallel geschaltet sind. Solche Anordnungen werden beispielsweise für 2P-Systeme verwendet und können daher einfach übernommen werden. Hierbei ist es auch denkbar, dass die Einzelzellen zusätzlich in einer Richtung der Querachse der Batterie nebeneinander angeordnet sind. Die Einzelzellen weisen bevorzugt eine prismatische Bauform auf, insbesondere weisen sie eine quaderförmige Außenform auf.

Hierbei ist es vorteilhaft, wenn jede der Zelleinheiten in einem Kopfbereich einen ersten Pol mit einer ersten Polarität und einen zweiten Pol mit einer zweiten Polarität aufweist, wobei die ersten Pole mit dem ersten Kontaktelement und die zweiten Pole mit dem zweiten Kontaktelement in einer Zelleinheit elektrisch parallel geschaltet sind. Dabei können die Pluspole der Einzelzelle aus Aluminium gefertigt sein. Ein entsprechendes Kontaktelement, das diese Pluspole verbindet, kann ebenfalls aus Aluminium gefertigt sein. Die Minuspole der Einzelzellen und das Kontaktelement, das diese verbindet, kann aus Kupfer gefertigt sein. Die Pole und die Kontaktelemente können durch Schweißen, Löten oder mit einem elektrisch leitfähigem Klebstoff verbunden sein. In gleicher Weise sind entsprechend Schraub- oder Klemmverbindungen denkbar.

Das erfindungsgemäße Verfahren zum Fertigen einer Batterie für ein Kraftfahrzeug umfasst das nebeneinander Anordnen einer Mehrzahl von Zelleinheiten entlang einer Längsachse der Batterie zu einem ersten Zellstapel, das nebeneinander Anordnen einer Mehrzahl von Zelleinheiten entlang einer Längsachse der Batterie zu einem zweiten Zellstapel, wobei jede der Zelleinheiten in einem Kopfbereich ein erstes elektrisches Kontaktelement mit einer ersten Polarität und ein zweites elektrisches Kontaktelement mit einer zweiten Polarität aufweist, das elektrische Koppeln der Zelleinheiten in dem ersten und dem zweiten Zellstapel, das elektrische Koppeln des ersten und des zweiten Zellstapels, das Anordnen des ersten und des zweiten Zellstapels in der Batterie derart zueinander, dass die Kopfbereiche der Zelleinheiten in dem ersten Zellstapel und die Kopfbereiche der Zelleinheiten in dem zweiten Zellstapel einander zugewandt sind und das elektrische Koppeln jeweils einander zugewandter Zelleinheiten des ersten und zweiten Zellstapels. Dabei bilden jeweils einander zugewandte Zelleinheiten des ersten und des zweiten Zellstapels, die elektrisch gekoppelt werden, eine Zellgruppe und nebeneinander angeordnete Zellgruppen werden elektrisch gekoppelt. Zudem werden die Zellgruppen entlang einer Längsachse der Batterie abwechseln in dem ersten und dem zweiten Zellstapel elektrisch gekoppelt. Zudem werden die Zelleinheiten in dem ersten und zweiten Zellstapel so zueinander angeordnet, dass entlang der Längsachse der Batterie die ersten und zweiten elektrischen Kontaktelemente jeweils alternierend zueinander angeordnet sind. Außerdem werden die elektrischen Kontaktelemente von zwei benachbarten Zelleinheiten in dem ersten Zellstapel an einer ersten Stirnseite der Batterie jeweils alternierend elektrisch verbunden und nicht verbunden und die elektrischen Kontaktelemente von zwei benachbarten Zelleinheiten in dem zweiten Zellstapel werden an der ersten Stirnseite der Batterie jeweils alternierend verbunden und nicht verbunden, wobei entlang der Hochachse der Batterie zwei verbundene Kontaktelemente in dem ersten Zellstapel jeweils zwei nicht verbundenen Kontaktelementen indem zweiten Zellstapel gegenüberstehen. An der ersten Stirnseite der Batterie wird zwischen den Kontaktelementen der Zelleinheiten in dem ersten Zellstapel und den Kontaktelementen der Zelleinheiten in dem zweiten Zellstapel zumindest ein Isolierelement angeordnet, so dass die elektrischen Kontaktelemente der jeweiligen Zelleinheiten an der ersten Stirnseite zueinander elektrisch isoliert angeordnet sind, und an einer der ersten Stirnseite gegenüberliegenden zweiten Stirnseite der Batterie wird ein erstes Kontaktelement einer Zelleinheit in dem ersten Zellstapel jeweils mit einem zweiten Kontaktelement einer Zelleinheit in dem zweiten Zellstapel elektrisch verbunden.

Die zuvor in Bezug auf die erfindungsgemäße Batterie beschriebenen Vorteile und Weiterbildungen können in gleicher Weise auf das erfindungsgemäße Verfahren übertragen werden.

Die vorliegende Erfindung wird nun anhand der beigefügten Zeichnungen näher erläutert. Dabei zeigen:
- Fig. 1: eine Perspektivdarstellung einer Batterie, die zwei Zellstapel umfasst;
- Fig. 2: eine Detailansicht der Batterie gemäß Fig. 1;
- Fig. 3: eine Seitenansicht der Batterie gemäß Fig. 1;
- Fig. 4: eine Vorderansicht der Batterie gemäß Fig. 1;
- Fig. 5: eine Rückansicht der Batterie gemäß Fig. 1; und
- Fig. 6: eine schematische Darstellung der elektrischen Verschaltung in der Batterie.

Die nachfolgend näher geschilderten Ausführungsbeispiele stellen bevorzugte Ausführungsformen der vorliegenden Erfindung dar.

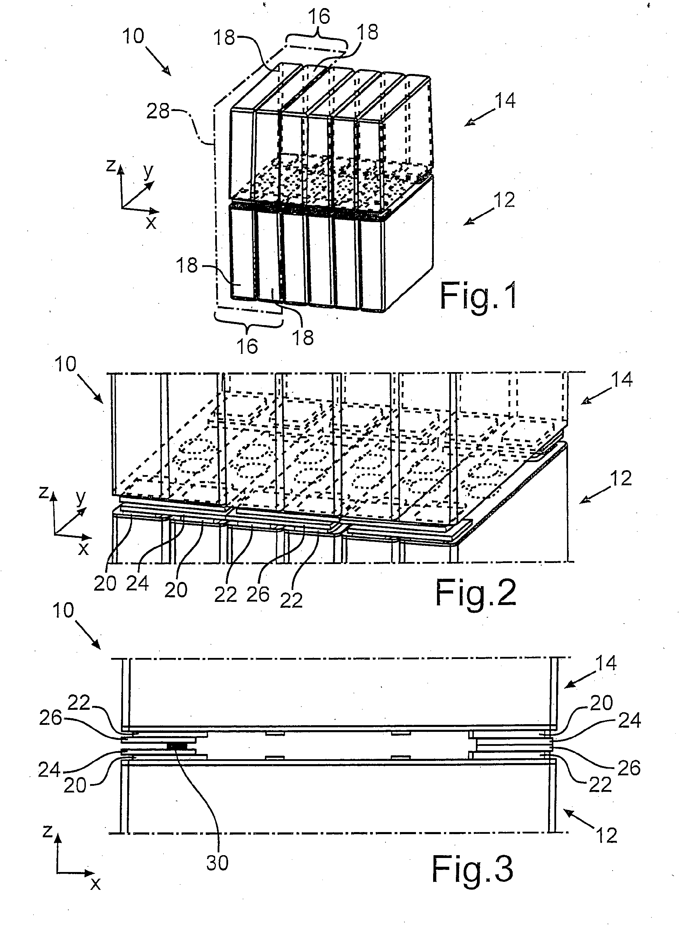

Fig. 1 zeigt eine Perspektivdarstellung einer Batterie 10 für ein Kraftfahrzeug. Die Batterie 10 umfasst einen ersten Zellstapel 12 und einen zweiten Zellstapel 14. Der erste Zellstapel 12 und der zweite Zellstapel 14 umfassen jeweils eine Mehrzahl von Zelleinheiten 16, die entlang einer Längsachse x der Batterie 10 nebeneinander angeordnet sind. Jede der Zelleinheiten 16 umfasst im vorliegenden Fall zwei Einzelzellen 18, die elektrisch parallel geschaltet sind.

In Fig. 2, die eine Detailansicht von Fig. 1 darstellt, ist zu erkennen, dass jede Einzelzelle 18 einen ersten Pol 20 mit einer ersten Polarität und einen zweiten Pol 22 mit einer zweiten Polarität aufweist. Der erste Pol 20 kann beispielsweise der Pluspol der Einzelzelle 18 sein, während der zweite Pol 22 der Minuspol der Einzelzelle 18 ist. Der erste Pol 20 kann beispielsweise aus Aluminium gefertigt sein, der zweite Pol 22 kann aus Kupfer gefertigt sein. Die ersten Pole 20 von benachbarten Einzelzellen 18 sind mit einem ersten Kontaktelement 24 elektrisch verbunden beziehungsweise parallel geschaltet. Die zweiten Elemente 22 benachbarter Einzelzellen 18 sind mit einem zweiten elektrischen Kontaktelement 26 elektrisch verbunden beziehungsweise in Reihe geschaltet. Zwei benachbarte Einzelzellen 18, die elektrisch miteinander verbunden sind, ergeben jeweils eine Zelleinheit 16. Vorliegend umfassen der erste Zellstapel 12 und der zweite Zellstapel 14 jeweils drei Zelleinheiten 16, die entlang der Längsachse x der Batterie 10 nebeneinander angeordnet sind. Die Zelleinheiten 16 im ersten Zellstapel 12 und dem zweiten Zellstapel 14 sind so entlang der Längsachse x der Batterie 10 nebeneinander angeordnet, dass entlang der Längsachse x erste Kontaktelemente 24 und zweite Kontaktelemente 26 alternierend nebeneinander angeordnet sind.

Wie aus den Figuren 1 und 2 zu erkennen ist, sind der erste Zellstapel 12 und der zweite Zellstapel 14 derart zueinander angeordnet, dass sich ihre Kopfbereiche, in denen jeweils die Pole 20, 22 angeordnet sind, gegenüberstehen. Vorliegend sind der erste Zellstapel 12 und der zweite Zellstapel 14 baugleich ausgebildet. Der zweite Zellstapel 14 ist vorliegend derart zu dem ersten Zellstapel 12 angeordnet, dass er entlang der Längsachse x der Batterie 10 um einen Winkel von 180° gedreht und entlang der Hochachse z der Batterie 10 um einen Winkel von 180° gedreht zu dem ersten Zellstapel 12 angeordnet ist. Dabei sind der erste Zellstapel 12 und der zweite Zellstapel 14 so zueinander platziert, dass sich die Kopfbereiche der Zelleinheiten 16 in dem ersten Zellstapel 12 und dem zweiten Zellstapel 14 gegenüberstehen. Der erste Zellstapel 12 und der zweite Zellstapel 14 sind derart zueinander angeordnet, dass jeweils ein erstes Kontaktelement 20 in dem ersten Zellstapel 12 zu einem zweiten elektrischen Kontaktelement 26 in dem zweiten Zellstapel 14 entlang der Hochachse z der Batterie 10 zumindest bereichsweise fluchtend angeordnet sind.

Durch diese Anordnung ergeben sich jeweils zwei einander zugewandte Zelleinheiten 16 des ersten Zellstapels 12 und des zweiten Zellstapels 14. Diese einander zugewandten Zelleinheiten 16 des ersten Zellstapels 12 und des zweiten Zellstapels 14, die - wie nachfolgend näher beschrieben - elektrisch miteinander verbunden sind, bilden eine Zellgruppe 28. Vorliegend umfasst die Batterie 10 eine Anordnung aus drei Zellgruppen 28, die entlang der Längsachse x der Batterie 10 nebeneinander angeordnet sind. Auch die einzelne Zellgruppen 28 der Batterie 10 sind jeweils - wie nachfolgend näher beschrieben - elektrisch miteinander verbunden. Somit kann auf einfache Weise eine elektrische Verbindung zwischen den Zelleinheiten 16 beziehungsweise den Einzelzellen 18 der Batterie 10 ermöglicht werden.

Die elektrische Verschaltung zwischen den Kontaktelementen 24, 26 der Zelleinheiten 16 ist vorliegend so vorgesehen, dass an einer ersten Stirnseite der Batterie 10 jeweils benachbarte Zellgruppen 28 elektrisch miteinander verbunden sind. An einer der ersten gegenüberliegenden zweiten Stirnseite der Batterie 10 ist die elektrische Verbindung von zwei Zelleinheiten 16 zu einer Zellgruppe 28 vorgesehen.

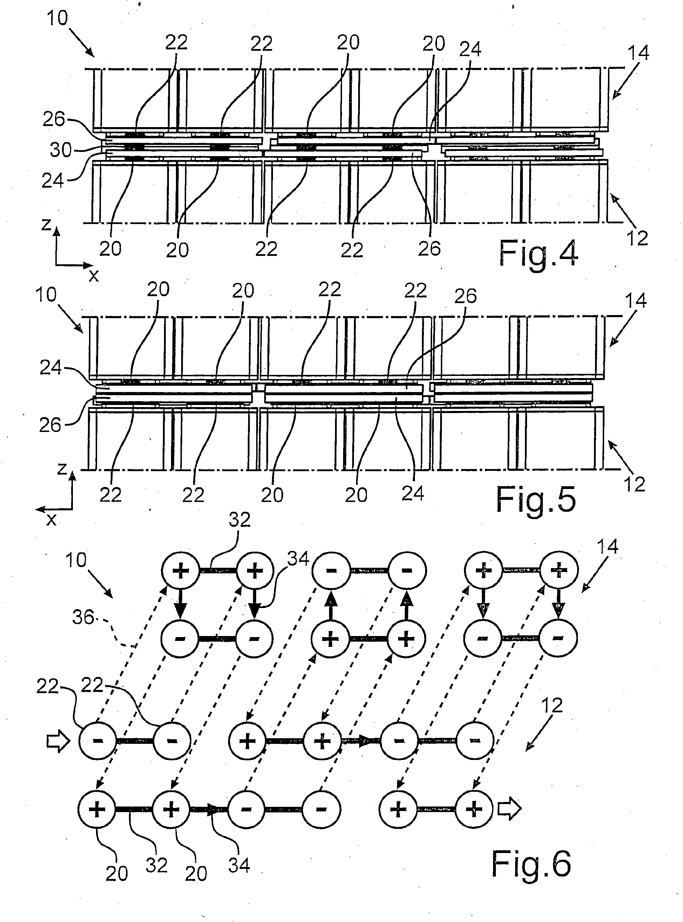

Zunächst wird die elektrische Verbindung der Zellgruppen 28 an der ersten Stirnseite beziehungsweise der Vorderseite der Batterie 10 beschrieben, die in Fig. 4 dargestellt ist. Die ersten Pole 20 benachbarter Einzelzellen 18 sind mit dem ersten elektrischen Kontaktelement 24 und die zweiten Pole 22 benachbarter Einzelzellen 18 sind mit einem zweiten elektrischen Kontaktelement 26 elektrisch verbunden, insbesondere parallel geschaltet. Vorliegend sind die ersten und zweiten Kontaktelemente 24, 26 derart ausgebildet, dass die elektrischen Kontaktelemente 24, 26 von zwei benachbarten Zelleinheiten 16 in dem ersten Zellstapel 12 und dem zweiten Zellstapel 14 jeweils alternierend elektrisch verbunden und nicht verbunden sind, wobei entlang der Hochachse z der Batterie 10 zwei verbundene Kontaktelemente 24, 26 in dem ersten Zellstapel 12 jeweils zwei nicht verbundenen Kontaktelementen 24, 26 in dem zweiten Zellstapel 14 gegenüberstehen. Die elektrische Verbindung von zwei elektrischen Kontaktelementen 24, 26 wird dadurch erreicht, dass die elektrischen Kontaktelemente 24, 26, die eine elektrische Verbindung aufweisen sollen, jeweils im Vergleich zu den Kontaktelementen 24, 26, die keine elektrische Verbindung aufweisen sollen, eine größere räumliche Erstreckung entlang der Längsachse x der Batterie 10 aufweisen. Somit kann auf besonders einfache Weise eine elektrische Kontaktierung zwischen den Zellgruppen 28 ermöglicht werden.

Die elektrische und mechanische Verbindung zwischen den Kontaktelemente 24, 26 untereinander und die Verbindung zwischen den Kontaktelemente 24, 26 und den Polen 20, 22 kann durch Schweißen, Löten oder durch einen leitfähigen Klebstoff erreicht werden. An der ersten Stirnseite der Batterie 10 sind zusätzlich zwischen den Kontaktelementen 24, 26 einer Zellgruppe 28 entsprechende Isolierelemente 30 angeordnet, die eine elektrische Isolierung zwischen den Einzelzellen beziehungsweise Zelleinheiten 16 des ersten Zellstapels 12 und des zweiten Zellstapels 14 ermöglichen. Diese Isolierelemente 30 können beispielsweise aus einem elektrisch isolierenden Material, wie beispielsweise einem Kunststoff, gefertigt sein.

Nachfolgend wird die elektrische Verbindung einander zugeordneter Zelleinheiten 16 des ersten Zellstapels 12 und des zweiten Zellstapels 14 erläutert, die an der zweiten Stirnseite der Batterie erfolgt. Die zweite Stirnseite beziehungsweise die Rückseite der Batterie ist in Fig. 5 dargestellt. Auch hier ist zu erkennen, dass die ersten Pole 20 der Einzelzellen 18 mit einem ersten Kontaktelement 24 und die zweiten Pole 22 der Einzelzellen 18 mit einem zweiten Kontaktelement 26 elektrisch parallel geschaltet sind. Hierbei ist die Anordnung derart ausgebildet, dass ein erstes Kontaktelement 24 des ersten oder zweiten Zellstapels 12, 14 jeweils mit einem zweiten Kontaktelement 26 des ersten oder zweiten Zellstapels 12, 14 elektrisch in Kontakt steht. Somit kann auf besonders einfache Weise eine elektrische Verbindung voneinander zugeordneten Zelleinheiten 16 des ersten Zellstapels 12 und des zweiten Zellstapels 14 erreicht werden.

Aus der Seitenansicht der Batterie 10 in Fig. 3 wird nochmals deutlich, dass an einer ersten Stirnseite der Batterie 10 die elektrischen Kontaktelemente 24, 26 der jeweiligen Zelleinheiten 16 zueinander elektrisch isoliert angeordnet sind, während die Kontaktelemente 24, 26 auf einer zweiten Stirnseite der Batterie 10 eine elektrische Verbindung aufweisen.

Fig. 6 zeigt eine schematische Darstellung der elektrischen Verschaltung in der Batterie 10. Die durchgezogenen Linien 32 kennzeichnen die Bereiche, die elektrisch miteinander verbunden sind. Die jeweiligen Pfeile 34 geben die Richtung des Flusses des elektrischen Stroms an. Die gestrichelten Linien 36 mit den dazugehörigen Pfeilen geben jeweils den Stromfluss innerhalb der Einzelzellen 18 an. Die ersten Pole 20 sind durch das Pluszeichen gekennzeichnet und die zweiten Pole 22 sind durch das Minuszeichen gekennzeichnet. Wie aus Fig. 6 ersichtlich ist, fließt der elektrische Strom der Batterie 10 in dem vorliegenden Fall zunächst von dem Minuspol der Zelleinheit 16 in dem zweiten Zellstapel 14 zu dem Pluspol in dieser Zelleinheit 16. Weiterhin fließt der elektrische Strom von dieser Zelleinheit 16 in dem zweiten Zellstapel 14 zu dem Minuspol 22 der dazugehörigen Zelleinheit 16 in dem ersten Zellstapel 12. In dieser Zelle fließt der Strom von dem Minuspol 22 zu dem Pluspol 20 der Zelleinheit 16. Von dort fließt der elektrische Strom zu dem Minuspol 22 der benachbarten Zelleinheit 16 in dem ersten Zellstapel 12. Der weitere Verlauf des Stromflusses in der Batterie 10 möge der Fig. 6 entnommen werden.

## Patentansprüche

1. Batterie (10) für ein Kraftfahrzeug mit
- einem ersten Zellstapel (12) und
- einem zweiten Zellstapel (14), wobei
- der erste und der zweite Zellstapel (12, 14) elektrisch gekoppelt sind,
- der erste und der zweite Zellstapel (12, 14) jeweils eine Mehrzahl von Zelleinheiten (16) umfassen, die entlang einer Längsachse (x) der Batterie (10) nebeneinander angeordnet und elektrisch gekoppelt sind,
- jede der Zelleinheiten (16) in einem Kopfbereich ein erstes elektrisches Kontaktelement (24) mit einer ersten Polarität und ein zweites elektrisches Kontaktelement (26) mit einer zweiten Polarität aufweist,
- in der Batterie (10) die Kopfbereiche der Zelleinheiten (16) in dem ersten Zellstapel (12) und die Kopfbereiche der Zelleinheiten (16) in dem zweiten Zellstapel (14) einander zugewandt sind,
- jeweils einander zugewandte Zelleinheiten (16) des ersten und zweiten Zellstapels (12, 14) elektrisch gekoppelt sind und so eine Zellgruppe (28) bilden und nebeneinander angeordnete Zellgruppen (28) elektrisch gekoppelt sind und
- die Zellgruppen (28) entlang der Längsachse (x) der Batterie (10) abwechselnd in dem ersten und dem zweiten Zellstapel (12, 14) elektrisch gekoppelt sind,
**dadurch gekennzeichnet, dass**
- die Zelleinheiten (16) in dem ersten und zweiten Zellstapel (12, 14) so zueinander angeordnet sind, dass entlang der Längsachse (x) der Batterie (10) die ersten und zweiten elektrischen Kontaktelemente (24, 26) jeweils alternierend zueinander angeordnet sind,
- die elektrischen Kontaktelemente (24, 26) von zwei benachbarten Zelleinheiten (16) in dem ersten Zellstapel (12) an einer ersten Stirnseite der Batterie (10) jeweils alternierend elektrisch verbunden und nicht verbunden sind und die elektrischen Kontaktelemente (24, 26) von zwei benachbarten Zelleinheiten (16) in dem zweiten Zellstapel (14) an der ersten Stirnseite der Batterie (10) jeweils alternierend verbunden und nicht verbunden sind, wobei entlang der Hochachse (z) der Batterie (10) zwei verbundene Kontaktelemente (24, 26) in dem ersten Zellstapel (12) jeweils zwei nicht verbundenen Kontaktelementen (24, 26) in dem zweiten Zellstapel (14) gegenüberstehen,
- an der ersten Stirnseite der Batterie (10) zwischen den Kontaktelementen (24, 26) der Zelleinheiten (16) in dem ersten Zellstapel (12) und den Kontaktelementen (24, 26) der Zelleinheiten (16) in dem zweiten Zellstapel (14) zumindest ein Isolierelement (30) angeordnet ist, so dass die elektrischen Kontaktelemente (24, 26) der jeweiligen Zelleinheiten (16) an der ersten Stirnseite zueinander elektrisch isoliert angeordnet sind, und
- an einer der ersten Stirnseite gegenüberliegenden zweiten Stirnseite der Batterie (10) ein erstes Kontaktelement (24) einer Zelleinheit (16) in dem ersten Zellstapel (12) jeweils mit einem zweiten Kontaktelement (26) einer Zelleinheit (16) in dem zweiten Zellstapel (14) elektrisch verbunden ist.

2. Batterie (10) nach Anspruch 1,
**dadurch gekennzeichnet, dass**
ein erstes elektrisches Kontaktelement (24) einer Zelleinheit (16) in dem ersten Zellstapel (12) jeweils zu einem zweiten elektrischen Kontaktelement (26) einer Zelleinheit (16) in dem zweiten Zellstapel (14) entlang einer Hochachse (z) der Batterie (10) zumindest bereichsweise fluchtend angeordnet ist.

3. Batterie (10) nach einem der vorhergehenden Ansprüche,
**dadurch gekennzeichnet, dass**
jede der Zelleinheiten (16) zumindest zwei Einzelzellen (18) umfasst, die in Richtung der Längsachse (x) der Batterie (10) nebeneinander angeordnet sind und die elektrisch parallel geschaltet sind.

4. Batterie (10) nach Anspruch 3,
**dadurch gekennzeichnet, dass**
jede der Einzelzellen (18) in einem Kopfbereich einen ersten Pol (20) mit einer ersten Polarität und einen zweiten Pol (22) mit einer zweiten Polarität aufweist, wobei zumindest zwei erste Pole (20) mit dem ersten Kontaktelement (24) und zumindest zwei zweite Pole (22) mit dem zweiten Kontaktelement (26) in einer Zelleinheit (16) elektrisch parallel geschaltet sind.

5. Verfahren zum Fertigen einer Batterie (10) für ein Kraftfahrzeug durch
- Nebeneinander Anordnen einer Mehrzahl von Zelleinheiten (16) entlang einer Längsachse (x) der Batterie (10) zu einem ersten Zellstapel (12),
- Nebeneinander Anordnen einer Mehrzahl von Zelleinheiten (16) entlang einer Längsachse (x) der Batterie (10) zu einem zweiten Zellstapel (14), wobei jede der Zelleinheiten (16) in einem Kopfbereich ein ersten elektrisches Kontaktelement (24) mit einer ersten Polarität und ein zweites elektrisches Kontaktelement (26) mit einer zweiten Polarität aufweist,
- Elektrisches Koppeln der Zelleinheiten (16) in dem ersten und dem zweiten Zellstapel (12, 14),
- Elektrisches Koppeln des ersten und des zweiten Zellstapels (12, 14),
- Anordnen des ersten und des zweiten Zellstapels (12, 14) in der Batterie (10) derart zueinander, dass die Kopfbereiche der Zelleinheiten (16) in dem ersten Zellstapel (12) und die Kopfbereiche der Zelleinheiten (16) in dem zweiten Zellstapel (14) einander zugewandt sind, und wobei
- jeweils einander zugewandte Zelleinheiten (16) des ersten und zweiten Zellstapels (12, 14) elektrisch gekoppelt werden und so eine Zellgruppe (28) bilden und nebeneinander angeordnete Zellgruppen (28) elektrisch gekoppelt werden, und
- die Zellgruppen (28) entlang der Längsachse (x) der Batterie (10) abwechselnd in dem ersten und dem zweiten Zellstapel (12, 14) elektrisch gekoppelt werden,
**dadurch gekennzeichnet, dass**
- die Zelleinheiten (16) in dem ersten und zweiten Zellstapel (12, 14) so zueinander angeordnet werden, dass entlang der Längsachse (x) der Batterie (10) die ersten und zweiten elektrischen Kontaktelemente (24, 26) jeweils alternierend zueinander angeordnet sind,
- die elektrischen Kontaktelemente (24, 26) von zwei benachbarten Zelleinheiten (16) in dem ersten Zellstapel (12) an einer ersten Stirnseite der Batterie (10) jeweils alternierend elektrisch verbunden und nicht verbunden werden und die elektrischen Kontaktelemente (24, 26) von zwei benachbarten Zelleinheiten (16) in dem zweiten Zellstapel (14) an der ersten Stirnseite der Batterie (10) jeweils alternierend verbunden und nicht verbunden werden, wobei entlang der Hochachse (z) der Batterie (10) zwei verbundene Kontaktelemente (24, 26) in dem ersten Zellstapel (12) jeweils zwei nicht verbundenen Kontaktelementen (24, 26) in dem zweiten Zellstapel (14) gegenüberstehen,
- an der ersten Stirnseite der Batterie (10) zwischen den Kontaktelementen (24, 26) der Zelleinheiten (16) in dem ersten Zellstapel (12) und den Kontaktelementen (24, 26) der Zelleinheiten (16) in dem zweiten Zellstapel (14) zumindest ein Isolierelement (30) angeordnet wird, so dass die elektrischen Kontaktelemente (24, 26) der jeweiligen Zelleinheiten (16) an der ersten Stirnseite zueinander elektrisch isoliert angeordnet sind, und
- an einer der ersten Stirnseite gegenüberliegenden zweiten Stirnseite der Batterie (10) ein erstes Kontaktelement (24) einer Zelleinheit (16) in dem ersten Zellstapel (12) jeweils mit einem zweiten Kontaktelement (26) einer Zelleinheit (16) in dem zweiten Zellstapel (14) elektrisch verbunden wird.

## Claims

1. Battery (10) for a motor vehicle having
- a first cell stack (12) and
- a second cell stack (14), wherein
- the first and the second cell stacks (12, 14) are electrically connected,
- the first and the second cell stacks (12, 14) each comprise a plurality of cell units (16) which are arranged beside each other along a longitudinal axis (x) of the battery (10) and which are electrically connected,
- each of the cell units (16) has in an upper region a first electrical contact element (24) having a first polarity and a second electrical contact element (26) having a second polarity,
- in the battery (10) the upper regions of the cell units (16) in the first cell stack (12) and the upper regions of the cell units (16) in the second cell stack (14) face each other,
- mutually facing cell units (16) of the first and second cell stacks (12, 14) are connected electrically and thus form a cell group (28) and cell groups (28) which are arranged beside each other are electrically connected and
- the cell groups (28) are electrically connected along the longitudinal axis (x) of the battery (10) alternately in the first and second cell stacks (12, 14),
**characterised in that**
- the cell units (16) in the first and second cell stacks (12, 14) are arranged relative to each other so that the first and second electrical contact elements (24, 26) are arranged alternately relative to each other along the longitudinal axis (x) of the battery (10),
- the electrical contact elements (24, 26) of two adjacent cell units (16) in the first cell stack (12) are electrically connected and not electrically connected alternately at a first end side of the battery (10) and the electrical contact elements (24, 26) of two adjacent cell units (16) in the second cell stack (14) are connected and not connected alternately at the first end side of the battery (10), wherein two connected contact elements (24, 26) in the first cell stack (12) are opposite two non-connected contact elements (24, 26) in the second cell stack (14) along the vertical axis (z) of the battery (10),
- at least one insulation element (30) is arranged at the first end side of the battery (10) between the contact elements (24, 26) of the cell units (16) in the first cell stack (12) and the contact elements (24, 26) of the cell units (16) in the second cell stack (14) so that the electrical contact elements (24, 26) of the respective cell units (16) are arranged in an electrically insulated manner relative to each other at the first end side, and
- a first contact element (24) of a cell unit (16) in the first cell stack (12) is electrically connected to a second contact element (26) of a cell unit (16) in the second cell stack (14) at a second end side of the battery (10) opposite the first end side.

2. Battery (10) according to Claim 1,
**characterised in that**
a first electrical contact element (24) of a cell unit (16) in the first cell stack (12) is arranged so as to be aligned at least in regions along a vertical axis (z) of the battery (10) relative to a second electrical contact element (26) of a cell unit (16) in the second cell stack (14).

3. Battery (10) according to either of the preceding claims,
**characterised in that**
each of the cell units (16) comprises at least two individual cells (18) which are arranged beside each other in the direction of the longitudinal axis (x) of the battery (10) and which are electrically connected in parallel.

4. Battery (10) according to Claim 3,
**characterised in that**
each of the individual cells (18) has in an upper region a first pole (20) having a first polarity and a second pole (22) having a second polarity, wherein at least two first poles (20) are electrically connected in parallel to the first contact element (24) and at least two second poles (22) are electrically connected in parallel to the second contact element (26) in a cell unit (16).

5. Method for producing a battery (10) for a motor vehicle by
- arranging beside each other a plurality of cell units (16) along a longitudinal axis (x) of the battery (10) to form a first cell stack (12),
- arranging beside each other a plurality of cell units (16) along a longitudinal axis (x) of the battery (10) to form a second cell stack (14), wherein each of the cell units (16) in an upper region has a first electrical contact element (24) having a first polarity and a second electrical contact element (26) having a second polarity,
- electrically connecting the cell units (16) in the first and second cell stacks (12, 14),
- electrically connecting the first and second cell stacks (12, 14),
- arranging the first and second cell stacks (12, 14) in the battery (10) relative to each other in such a manner that the upper regions of the cell units (16) in the first cell stack (12) and the upper regions of the cell units (16) in the second cell stack (14) face each other, and wherein
- mutually facing cell units (16) of the first and second cell stacks (12, 14) are connected electrically and thus form a cell group (28) and cell groups (28) which are arranged beside each other are electrically connected and
- the cell groups (28) are electrically connected along the longitudinal axis (x) of the battery (10) alternately in the first and second cell stacks (12, 14),
**characterised in that**
- the cell units (16) in the first and second cell stacks (12, 14) are arranged relative to each other so that the first and second electrical contact elements (24, 26) are arranged alternately relative to each other along the longitudinal axis (x) of the battery (10),
- the electrical contact elements (24, 26) of two adjacent cell units (16) in the first cell stack (12) are electrically connected and not electrically connected alternately at a first end side of the battery (10) and the electrical contact elements (24, 26) of two adjacent cell units (16) in the second cell stack (14) are connected and not connected alternately at the first end side of the battery (10), wherein two connected contact elements (24, 26) in the first cell stack (12) are opposite two non-connected contact elements (24, 26) in the second cell stack (14) along the vertical axis (z) of the battery (10),
- at least one insulation element (30) is arranged at the first end side of the battery (10) between the contact elements (24, 26) of the cell units (16) in the first cell stack (12) and the contact elements (24, 26) of the cell units (16) in the second cell stack (14) so that the electrical contact elements (24, 26) of the respective cell units (16) are arranged in an electrically insulated manner relative to each other at the first end side, and
- a first contact element (24) of a cell unit (16) in the first cell stack (12) is electrically connected to a second contact element (26) of a cell unit (16) in the second cell stack (14) at a second end side of the battery (10) opposite the first end side.

## Revendications

1. Batterie (10) pour un véhicule automobile, avec
- un premier empilement d'éléments (12) et
- un deuxième empilement d'éléments (14), dans laquelle
- le premier et le deuxième empilement d'éléments (12, 14) sont couplés de manière électrique,
- le premier et le deuxième empilement d'éléments (12, 14) comprennent respectivement une multitude d'unités d'éléments (16), qui sont disposées les unes à côté des autres le long d'un axe longitudinal (x) de la batterie (10) et sont couplées de manière électrique,
- chacune des unités d'éléments (16) présente dans une zone de tête un premier élément de contact (24) électrique avec une première polarité et un deuxième élément de contact (26) électrique avec une deuxième polarité,
- dans la batterie (10), les zones de têtes des unités d'éléments (16) dans le premier empilement d'éléments (12) et les zones de tête des unités d'éléments (16) dans le deuxième empilement d'éléments (14) sont tournées les unes vers les autres,
- des unités d'éléments (16) respectivement tournées les unes vers les autres du premier et du deuxième empilement d'éléments (12, 14) sont couplées de manière électrique et forment ainsi un groupe d'éléments (28) et des groupes d'éléments (28) disposés les uns à côté des autres sont couplés de manière électrique, et
- les groupes d'éléments (28) sont couplés de manière électrique le long de l'axe longitudinal (x) de la batterie (10) en alternance dans le premier et le deuxième empilement d'éléments (12, 14),
**caractérisée en ce que**
- les unités d'éléments (16) sont disposées dans le premier et le deuxième empilement d'éléments (12, 14) de telle manière les unes par rapport aux autres que les premiers et deuxièmes éléments de contact (24, 26) électriques sont disposés respectivement de manière alternée les uns par rapport aux autres le long de l'axe longitudinal (x) de la batterie (10),
- les éléments de contact (24, 26) électriques de deux unités d'éléments (16) adjacentes dans le premier empilement d'éléments (12) au niveau d'un premier côté frontal de la batterie (10), respectivement, sont reliés et non reliés électriquement de manière alternée et les éléments de contact (24, 26) électriques de deux unités d'éléments (16) adjacentes dans le deuxième empilement d'éléments (14) au niveau du premier côté frontal de la batterie (10), respectivement, sont reliés et non reliés de manière alternée, dans laquelle deux éléments de contact (24, 26) reliés dans le premier empilement d'éléments (12) font face respectivement à deux éléments de contact (24, 26) non reliés dans le deuxième empilement d'éléments (14) le long de l'axe vertical (z) de la batterie (10),
- au moins un élément isolant (30) est disposé au niveau du premier côté frontal de la batterie (10) entre les éléments de contact (24, 26) des unités d'éléments (16) dans le premier empilement d'éléments (12) et les éléments de contact (24, 26) des unités d'éléments (16) dans le deuxième empilement d'éléments (14) si bien que les éléments de contact (24, 26) électriques des unités d'éléments (16) respectives sont disposés de manière isolée électriquement les uns par rapport aux autres au niveau du premier côté frontal, et
- un premier élément de contact (24) d'une unité d'éléments (16) dans le premier empilement d'éléments (12) est relié de manière électrique respectivement à un deuxième élément de contact (26) d'une unité d'éléments (16) dans le deuxième empilement d'éléments (14) au niveau d'un deuxième côté frontal, faisant face au premier côté frontal, de la batterie (10).

2. Batterie (10) selon la revendication 1,
**caractérisée en ce que**
un premier élément de contact (24) électrique d'une unité d'éléments (16) dans le premier empilement d'éléments (12) est disposé en affleurement au moins par endroits respectivement par rapport à un deuxième élément de contact (26) électrique d'une unité d'éléments (16) dans le deuxième empilement d'éléments (14) le long d'un axe vertical (z) de la batterie (10).

3. Batterie (10) selon l'une quelconque des revendications précédentes,
**caractérisée en ce que**
chacune des unités d'éléments (16) comprend au moins deux éléments individuels (18), qui sont disposés les uns à côté des autres en direction de l'axe longitudinal (x) de la batterie (10) et sont branchées électriquement en parallèle.

4. Batterie (10) selon la revendication 3,
**caractérisée en ce que**
chacun des éléments individuels (18) présente dans une zone de tête un premier pôle (20) avec une première polarité et un deuxième pôle (22) avec une deuxième polarité, dans laquelle au moins deux premiers pôles (20) sont branchés de manière électrique en parallèle avec le premier élément de contact (24) et au moins deux deuxièmes pôles (22) sont branchés de manière électrique en parallèle avec le deuxième élément de contact (26) dans une unité d'éléments (16).

5. Procédé servant à produire une batterie (10) pour un véhicule automobile par
- l'agencement juxtaposé d'une multitude d'unités d'éléments (16) le long d'un axe longitudinal (x) de la batterie (10) en un premier empilement d'éléments (12),
- l'agencement juxtaposé d'une multitude d'unités d'éléments (16) le long d'un axe longitudinal (x) de la batterie (10) en un deuxième empilement d'éléments (14), dans lequel chacune des unités d'éléments (16) présente dans une zone de tête un premier élément de contact (24) électrique avec une première polarité et un deuxième élément de contact (26) électrique avec une deuxième polarité,
- le couplage électrique des unités d'éléments (16) dans le premier et le deuxième empilement d'éléments (12, 14),
- le couplage électrique du premier et du deuxième empilement d'éléments (12, 14),
- l'agencement du premier et du deuxième empilement d'éléments (12, 14) dans la batterie (10) les uns par rapport aux autres de telle manière que les zones de tête des unités d'éléments (16) dans le premier empilement d'éléments (12) et les zones de tête des unités d'éléments (16) dans le deuxième empilement d'éléments (14) sont tournées les unes vers les autres et dans lequel
- des unités d'éléments (16) respectivement tournées les unes vers les autres du premier et du deuxième empilement d'éléments (12, 14) sont couplées de manière électrique et forment ainsi un groupe d'éléments (28) et des groupes d'éléments (28) disposés les uns à côté des autres sont couplés de manière électrique, et
- les groupes d'éléments (28) sont couplés de manière électrique le long de l'axe longitudinal (x) de la batterie (10) en alternance dans le premier et le deuxième empilement d'éléments (12, 14),
**caractérisé en ce que**
- les unités d'éléments (16) sont disposées dans le premier et le deuxième empilement d'éléments (12, 14) de telle manière les unes par rapport aux autres que les premiers et deuxièmes éléments de contact (24, 26) électriques sont disposés respectivement de manière alternée les uns par rapport aux autres le long de l'axe longitudinal (x) de la batterie (10),
- les éléments de contact (24, 26) électriques de deux unités d'éléments (16) adjacentes dans le premier empilement d'éléments (12) au niveau d'un premier côté frontal de la batterie (10), respectivement, sont reliés et non reliés électriquement de manière alternée et les éléments de contact (24, 26) électriques de deux unités d'éléments (16) adjacentes dans le deuxième empilement d'éléments (14) au niveau du premier côté frontal de la batterie (10), respectivement, sont reliés et non reliés de manière alternée, dans lequel deux éléments de contact (24, 26) reliés dans le premier empilement d'éléments (12) font face respectivement à deux éléments de contact (24, 26) non reliés dans le deuxième empilement d'éléments (14) le long de l'axe vertical (z) de la batterie (10),
- au moins un élément isolant (30) est disposé au niveau du premier côté frontal de la batterie (10) entre les éléments de contact (24, 26) des unités d'éléments (16) dans le premier empilement d'éléments (12) et les éléments de contact (24, 26) des unités d'éléments (16) dans le deuxième empilement d'éléments (14) si bien que les éléments de contact (24, 26) électriques des unités d'éléments (16) respectives sont disposés de manière isolée électriquement les uns par rapport aux autres au niveau du premier côté frontal, et
- un premier élément de contact (24) d'une unité d'éléments (16) dans le premier empilement d'éléments (12) est relié de manière électrique respectivement à un deuxième élément de contact (26) d'une unité d'éléments (16) dans le deuxième empilement d'éléments (14) au niveau d'un deuxième côté frontal, faisant face au premier côté frontal, de la batterie (10).
